(19) Europäisches Patentamt
European Patent Office
Office européen des brevets

(11) **EP 4 439 768 A1**

(12) **EUROPEAN PATENT APPLICATION**

(43) Date of publication:
**02.10.2024 Bulletin 2024/40**

(21) Application number: **24150184.0**

(22) Date of filing: **03.01.2024**

(51) International Patent Classification (IPC):
***H01M 10/0567*** *(2010.01)* ***H01M 10/0568*** *(2010.01)*
***H01M 10/0569*** *(2010.01)* ***H01M 4/62*** *(2006.01)*
***H01M 10/0525*** *(2010.01)* ***H01M 4/133*** *(2010.01)*
***H01M 4/134*** *(2010.01)* ***H01M 4/525*** *(2010.01)*
***H01M 4/587*** *(2010.01)*

(52) Cooperative Patent Classification (CPC):
**H01M 10/0567; H01M 4/133; H01M 4/134; H01M 4/525; H01M 4/587; H01M 4/625; H01M 10/0568; H01M 10/0569;** H01M 10/0525; H01M 2300/004

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.03.2023 KR 20230040714**

(71) Applicant: **Samsung SDI Co., Ltd.**
**Yongin-si, Gyeonggi-do 17084 (KR)**

(72) Inventors:
- **Park, Injun**
  **17084 Yongin-si, Gyeonggi-do (KR)**
- **Kim, Myunghoon**
  **17084 Yongin-si, Gyeonggi-do (KR)**
- **Shin, Jeongmin**
  **17084 Yongin-si, Gyeonggi-do (KR)**
- **Oh, Seungryong**
  **17084 Yongin-si, Gyeonggi-do (KR)**
- **Kim, Aeran**
  **17084 Yongin-si, Gyeonggi-do (KR)**
- **Kim, Yunhee**
  **17084 Yongin-si, Gyeonggi-do (KR)**

(74) Representative: **Gulde & Partner**
**Patent- und Rechtsanwaltskanzlei mbB**
**Wallstraße 58/59**
**10179 Berlin (DE)**

(54) **RECHARGEABLE BATTERY**

(57) A rechargeable lithium battery including an electrolyte, a positive electrode including a positive electrode active material, and a negative electrode including a negative electrode active material is provided. The electrolyte includes a combination of additives and lithium salts and a length and amount of a negative electrode active material.

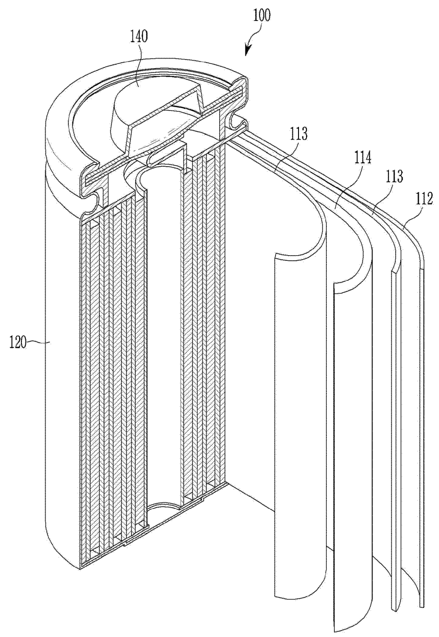


Fig. 1



Processed by Luminess, 75001 PARIS (FR)

## Description

## BACKGROUND

### 1. Field

One or more embodiments of the present disclosure relate to a rechargeable lithium battery.

### 2. Description of Related Art

A rechargeable lithium battery may be recharged and has three or more times higher (e.g., is at least three times in) energy density per unit weight than a comparable lead storage battery, nickel-cadmium battery, nickel hydrogen battery, nickel zinc battery and/or the like. Because rechargeable lithium batteries may be highly charged and are commercially manufactured for a laptop, a cell phone, an electric tool, an electric bike, and/or the like, research on improvement of additional energy density is actively being conducted.

Such a rechargeable lithium battery is manufactured by injecting an electrolyte into an electrode assembly, which includes a positive electrode and a negative electrode. The positive electrode includes a positive electrode active material capable of intercalating/deintercalating lithium ions. The negative electrode includes a negative electrode active material capable of intercalating/deintercalating lithium ions.

Recently, one area of investigation and development into rechargeable lithium batteries is to improve high-temperature operating and storage characteristics. In general, rechargeable lithium batteries may experience resistance increases and/or cycle-life decreases at high temperatures.

In this regard, the implementation of electrolyte additives is being researched, but the effectiveness to improve high-temperature operating and storage characteristics is limited if only electrolyte additives alone are considered.

## SUMMARY

The invention is defined by the appended claims. The description that follows is subjected to this limitation. Any disclosure lying outside the scope of said claims is only intended for illustrative as well as comparative purposes.

One or more aspects are directed toward materials to solve the problem of increasing resistance and/or decreasing cycle-life of a rechargeable lithium battery at a high temperature.

Additional aspects will be set forth in part in the description which follows and, in part, will be apparent from the description, or may be learned by practice of the presented embodiments of the disclosure.

The rechargeable lithium battery of some embodiments can suppress or reduce an increase in resistance at a high temperature and/or secure a cycle-life by controlling the length and content of a negative electrode conductive material while adding a specific additive and a lithium salt to the electrolyte in combination.

## BRIEF DESCRIPTION OF THE DRAWING

The drawing (Figure 1) is a schematic view showing a rechargeable lithium battery according to some embodiments of the present invention.

## DETAILED DESCRIPTION

Hereinafter, embodiments of the present disclosure are described in more detail with reference to the accompanying drawing. However, these embodiments are merely examples, the present disclosure is not limited thereto, and the present disclosure is defined by the scope of claims. The present disclosure may be modified in many alternate forms, and is intended to cover all modifications, equivalents, and alternatives falling within the spirit and scope of the present disclosure.

The terminology utilized herein describes embodiments only, and is not intended to limit the present disclosure. The singular expression includes the plural expression unless the context clearly dictates otherwise. Unless otherwise defined, all chemical names, technical and scientific terms, and terms defined in common dictionaries should be interpreted as having meanings consistent with the context of the related art, and should not be interpreted in an ideal or overly formal sense. It will be understood that, although the terms first, second, etc. may be used herein to describe various elements, these elements should not be limited by these terms. These terms are only used to distinguish one element from another element. Thus, a first element could be termed a second element without departing from the teachings of the present disclosure. Similarly, a second element could be termed a first element.

## Definitions

The term "combination thereof may include a mixture, a laminate, a complex, a copolymer, an alloy, a blend, a reactant of constituents.

The terms "comprises," "comprising," "comprise," "includes," "including," "include" "having," "has," and/or "have" are intended to designate that the performed characteristics, numbers, steps, constituted elements, or a combination thereof are present, but it should be understood that the possibility of presence or addition of one or more other characteristics, numbers, steps, constituted element, or a combination do not be precluded in advance.

As used herein, singular forms such as "a," "an," and "the" are intended to include the plural forms as well, unless the context clearly indicates otherwise.

As used herein, the terms "use," "using," and "used" may be considered synonymous with the terms "utilize," "utilizing," and "utilized," respectively.

As used herein, expressions such as "at least one of," "one of," and "selected from," if preceding a list of elements, modify the entire list of elements and do not modify the individual elements of the list. For example, the expressions "at least one of a to c," "at least one of a, b or c," and "at least one of a, b and/or c" may indicate only a, only b, only c, both (e.g., simultaneously) a and b, both (e.g., simultaneously) a and c, both (e.g., simultaneously) b and c, all of a, b, and c, or variations thereof.

As used herein, the term "and/or" includes any and all combinations of one or more of the associated listed items.

The term "may" will be understood to refer to "one or more embodiments of the present disclosure," some of which include the described element and some of which exclude that element and/or include an alternate element. Similarly, alternative language such as "or" refers to "one or more embodiments of the present disclosure," each including a corresponding listed item.

It will be understood that if an element is referred to as being "on," "connected to," or "coupled to" another element, it may be directly on, connected, or coupled to the other element or one or more intervening elements may also be present. If an element is referred to as being "directly on," "directly connected to," or "directly coupled to" another element, there are no intervening elements present.

In this context, "consisting essentially of" means that any additional components will not materially affect the chemical, physical, optical or electrical properties of the semiconductor film.

In the drawing, the thickness of layers, films, panels, regions, etc., are exaggerated for clarity and like reference numerals designate like elements throughout, and duplicative descriptions thereof may not be provided in the specification. It will be understood that if an element such as a layer, film, region, or substrate is referred to as being "on" another element, it can be directly on the other element or intervening elements may also be present. In contrast, if an element is referred to as being "directly on" another element, there are no intervening elements present.

As utilized herein, ifspecific definition is not otherwise provided, "substituted" refers to replacement of at least one hydrogen of a compound by a halogen atom (F, Cl, Br, or I), a hydroxy group, a C1 to C20 alkoxy group, a nitro group, a cyano group, an amine group, an imino group, an azido group, an amidino group, a hydrazino group, a hydrazono group, a carbonyl group, a carbamyl group, a thiol group, an ester group, an ether group, a carboxyl group or a salt thereof, a sulfonic acid group or a salt thereof, a phosphoric acid or a salt thereof, a C1 to C20 alkyl group, a C2 to C20 alkenyl group, a C2 to C20 alkynyl group, a C6 to C30 aryl group, a C3 to C20 cycloalkyl group, a C3 to C20 cycloalkenyl group, a C3 to C20 cycloalkynyl group, a C2 to C20 heterocycloalkyl group, a C2 to C20 heterocycloalkenyl group, and a C2 to C20 heterocycloalkynyl group.

Expressions such as C1 to C30 refer to that the number of carbon atoms is 1 to 30.

As utilized herein, if specific definition is not otherwise provided, "heterocycloalkyl group", "heterocycloalkenyl group", "heterocycloalkynyl group," and "heterocycloalkylene group" refer to presence of at least one N, O, S, or P in a cyclic compound of cycloalkyl, cycloalkenyl, cycloalkynyl, and cycloalkylene.

In the chemical formula of the present specification, unless a specific definition is otherwise provided, hydrogen is boned at the position ifa chemical bond is not drawn where supposed to be given.

In this specification, the "length" of a carbon nanotube (CNT) refers to an average length of the major axis of the CNT measured by means of scanning electron microscopy (SEM) or measured by cryogenic transmission electron microscopy (cryo-TEM) of CNTs in chlorosulfonic acid (see Bengio, Elie et al., (2014), Statistical Length Measurement Method by Direct Imaging of Carbon Nanotubes, ACS applied materials & interfaces).

Hereinafter, a rechargeable lithium battery according to some embodiments will be described in more detail with reference to the accompanying drawings. However, these embodiments are example, the present disclosure is not limited thereto and the present invention is defined by the scope of claims.

## Rechargeable Lithium Battery

The present invention provides a rechargeable lithium battery including a positive electrode including a positive

electrode active material; a negative electrode including a negative electrode active material; and an electrolyte.

The rechargeable lithium battery can suppress or reduce an increase in resistance at a high temperature and/or secure (e.g., improve or increase) a cycle-life by controlling the length and content of a negative electrode conductive material while adding a specific additive and a lithium salt to the electrolyte in combination.

**Electrolyte**

The electrolyte includes a non-aqueous organic solvent, a lithium salt, and an additive.

**Additive**

The additive includes a compound represented by Chemical Formula 1:

Chemical Formula 1

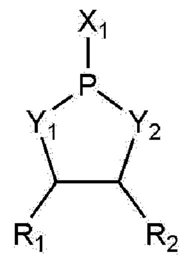

In Chemical Formula 1,

$X_1$ is a halogen atom;
$Y_1$ and $Y_2$ may each independently be O or S; and
$R_1$ and $R_2$ may each independently be a hydrogen atom, a halogen atom, a substituted or unsubstituted C1 to C10 alkyl group, a vinyl group, a substituted or unsubstituted C6 to C10 aryl group, or a substituted or unsubstituted C2 to C10 heteroaryl group including a N, O, or P heteroatom. For example, $R_1$ and $R_2$ may each independently be a hydrogen atom or a C1 to C5 alkyl group.

The additive has a strong Lewis-base functional group, and may suppress or reduce the decomposition of the lithium salt and remove active oxygen radicals, thereby improving the high-temperature characteristics of the battery.

In some embodiments, $X_1$ may be a fluorine atom.

In some embodiments, $Y_1$ and $Y_2$ may each be O.

In some embodiments, the additive may be a compound represented by Chemical Formula 1-1-1.

Chemical Formula 1-1-1

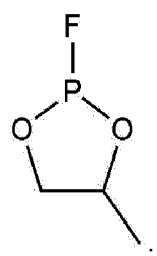

In some embodiments, the additive may be included in an amount of 0.1 to 10 wt% based on a total amount of the electrolyte. For example, the additive may be included in an amount of 0.1 to 10 wt%, 0.2 to 5 wt%, 0.5 to 3 wt%, or 0.5 to 1.5 wt% based on a total amount of the electrolyte. Within these ranges, an effect of improving the high-temperature characteristics of the battery may be significant.

**Lithium Salt**

The lithium salt is dissolved in a non-aqueous organic solvent, and may supply a battery with lithium ions, basically operates the rechargeable lithium battery, and improves transportation of the lithium ions between positive and negative electrodes.

The lithium salt includes a lithium imide salt, which has an effect of improving high-temperature characteristics of the battery.

In some embodiments, the lithium imide salt may be represented by Chemical Formula 2.

Chemical Formula 2

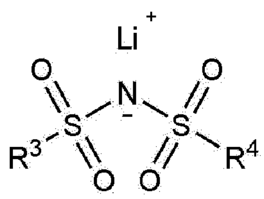

In Chemical Formula 2,

$R^3$ and $R^4$ may each independently be a fluorine atom or a C1 to C3 alkyl group substituted with at least one fluorine atom.

In some embodiments, $R^3$ and $R^4$ may each independently be a fluorine atom or a methyl group substituted with three fluorine atoms.

In some embodiments, both $R^3$ and $R^4$ may be fluorine atom or methyl groups substituted with three fluorine atom.

In some embodiments, the lithium imide salt may be represented by Chemical Formula 2-1 or 2-2.

Chemical Formula 2-1

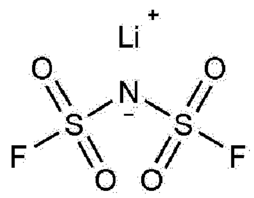

[Chemical Formula 2-2]

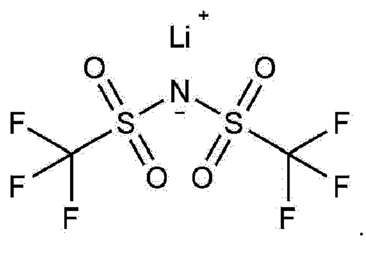

The lithium imide salt represented by Chemical Formula 2-1 is lithium bis(fluorosulfonyl) imide, and the lithium imide salt represented by Chemical Formula 2-2 is lithium bis(trifluoromethanesulfonyl)imide.

In some embodiments, the lithium imide salt may be included in an amount of 10 to 50 wt% based on a total amount of the lithium salt. Within these ranges, an effect of improving the high-temperature characteristics of the battery may be significant.

In some embodiments, the lithium imide salt may be included in an amount of 10 to 90 wt% based on a total

amount of the lithium salt. Within these ranges, an effect of improving the high-temperature characteristics of the battery may be significant. For example, if the content of the lithium imide salt based on a total amount of the lithium salt is less than about 10 wt%, the content is small and the effect of improving the high-temperature characteristics of the battery is insignificant, and if it exceeds 90 wt%, the high-temperature characteristics of the battery may be deteriorated.

For example, the lithium imide salt may be included in an amount of 10 to 70 wt%, or 35 to 50 wt% based on a total amount of the lithium salt.

The lithium salt further includes an additional lithium salt in addition to the lithium imide salt. Representative examples of the additional lithium salt may include one or more selected from among $LiPF_6$, $LiBF_4$, $C_4F_2LiO_8P$ (lithium difluoro(bisoxalato)phosphate; LiDFOP), $LiBF_2(C_2O_4)$ (lithium difluoro(oxalate)borat; LiDFOB), $LiPO_2F_2$, $LiSbF_6$, $LiAsF_6$, $LiN(SO_3C_2F_5)_2$, $LiC_4F_9SO_3$, $LiClO_4$, $LiAlO_2$, $LiAlCl_4$, LiCl, LiI, and $LiB(C_2O_4)_2$ (lithium bis(oxalato)borate; LiBOB).

In some embodiments, a concentration of the total lithium salt may be utilized within the range of 0.1 M to 2.0 M. If the concentration of the total lithium salt is within the above range, the electrolyte has appropriate or suitable conductivity and viscosity, and thus excellent or suitable electrolyte performance can be exhibited, and lithium ions can move effectively.

**Non-aqueous Organic Solvent**

The non-aqueous organic solvent serves as a medium for transmitting ions taking part in the electrochemical reaction of a battery.

The non-aqueous organic solvent may include a carbonate-based, ester-based, ether-based, ketone-based, alcohol-based, or aprotic solvent.

The carbonate-based solvent may include ethylmethyl carbonate (EMC), dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), and butylene carbonate (BC). The ester-based solvent may include methyl acetate, ethyl acetate, n-propyl acetate, t-butyl acetate, methylpropionate, ethylpropionate, propylpropionate, decanolide, mevalonolactone, and caprolactone. The ether-based solvent may include dibutyl ether, tetraglyme, diglyme, dimethoxyethane, 2-methyltetrahydrofuran, and tetrahydrofuran. The ketone-based solvent may include cyclohexanone. The alcohol-based solvent may include ethyl alcohol, and isopropyl alcohol, and examples of the aprotic solvent include nitriles such as R-CN (wherein R is a C2 to C20 linear, branched, or cyclic hydrocarbon group, a double bond, an aromatic ring, or an ether bond), amides such as dimethylformamide, dioxolanes such as 1,3-dioxolane, and sulfolanes.

The non-aqueous organic solvent may be utilized alone or in a mixture. If the organic solvent is utilized in a mixture, their mixing ratio may be controlled or selected in accordance with a desirable battery performance.

The carbonate-based solvent is prepared by mixing a cyclic carbonate and a chain carbonate. The cyclic carbonate and chain carbonate are mixed together in a volume ratio of 5:95 to 50:50. If the mixture is utilized as an electrolyte, it may have enhanced performance.

For example, ethylene carbonate (EC) may be utilized as the cyclic carbonate, and ethylmethyl carbonate (EMC) and dimethyl carbonate (DMC) may be utilized as the chain carbonate.

For example, the non-aqueous organic solvent may include a carbonate-based solvent in which ethylene carbonate (EC), ethylmethyl carbonate (EMC), and dimethyl carbonate (DMC) are mixed. For example, the carbonate-based solvent in which ethylene carbonate (EC), ethylmethyl carbonate (EMC), and dimethyl carbonate (DMC) are mixed in a volume ratio of EC:EMC:DMC = 1:0.5:5 to 5:3:10 may exhibit improved performance of the electrolyte.

The non-aqueous organic solvent may further include an aromatic hydrocarbon-based solvent as well as the carbonate-based solvent. The carbonate-based solvent and aromatic hydrocarbon-based solvent may be mixed together in a volume ratio of 1:1 to 30:1.

The aromatic hydrocarbon-based solvent may be an aromatic hydrocarbon-based compound represented by Chemical Formula 3.

Chemical Formula 3

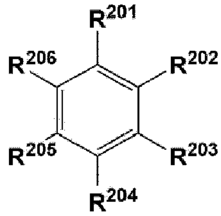

In Chemical Formula 3, $R^{201}$ to $R^{206}$ may each independently be the same or different and are selected from among hydrogen, a halogen, a C1 to C10 alkyl group, a haloalkyl group, and a combination thereof.

Examples of the aromatic hydrocarbon-based solvent may be selected from among benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and a combination thereof.

The electrolyte may further include vinylene carbonate, vinyl ethylene carbonate, or an ethylene carbonate-based compound of Chemical Formula 4 to improve cycle-life of a battery as a cycle life-enhancing additive.

Chemical Formula 4

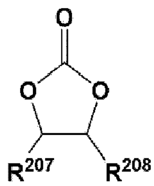

In Chemical Formula 4, $R^{207}$ and $R^{208}$ may each independently be the same or different and are selected from among hydrogen, a halogen, a cyano group (CN), a nitro group ($NO_2$), or a C1 to C5 fluoroalkyl group, provided that at least one of $R^{207}$ and $R^{208}$ is a halogen, a cyano group (CN), a nitro group ($NO_2$), or a C1 to C5 fluoroalkyl group, and $R^{207}$ and $R^{208}$ are not concurrently (e.g., simultaneously, i.e., not each) hydrogen.

Examples of the ethylene carbonate-based compound include difluoro ethylene carbonate, chloroethylene carbonate, dichloroethylene carbonate, bromoethylene carbonate, dibromoethylene carbonate, nitroethylene carbonate, cyanoethylene carbonate or fluoroethylene carbonate. The amount of the additive for improving cycle-life may be utilized within an appropriate or suitable range.

**Negative Electrode**

The negative electrode includes a conductive material, and the conductive material is utilized to impart conductivity to the electrode, and essentially includes carbon nanotubes (CNT).

However, the high-temperature characteristics of the battery may vary depending on the length and content of the carbon nanotubes. The length of the carbon nanotubes is 5 to 100 μm, and the carbon nanotubes are included in an amount of 0.5 to 2 wt% based on a total amount of the negative electrode active material layer.

If the length of the carbon nanotube is less than 5 μm, the length is too short and the effect of contributing to the high-temperature characteristics of the battery is insignificant. If the length of the carbon nanotube is greater than 100 μm, the length is too long, and the high-temperature characteristics of the battery are rather impaired.

If the content of the carbon nanotubes is less than 0.5 wt% based on a total amount of the negative electrode active material layer, the content is too low and the effect of contributing to the high-temperature characteristics of the battery is insignificant. If the content of the carbon nanotubes based on a total amount of the negative electrode active

material layer is greater than 2 wt%, the content is too high and rather inhibits the high-temperature characteristics of the battery.

In some embodiments, the negative electrode may further include an additional conductive material in addition to the carbon nanotubes.

Any material that does not cause chemical change and conducts electrons can be utilized as the additional conductive material, and examples thereof may include a conductive material including carbon-based materials such as natural graphite, artificial graphite, carbon black, acetylene black, ketjen black, and carbon fibers; metal-based materials such as metal powders or metal fibers, such as copper, nickel, aluminum, and silver; conductive polymers such as polyphenylene derivatives; or a mixture thereof.

In this case, the total conductive material may be included in an amount of about 1 wt% to about 5 wt% based on a total amount of the negative electrode active material layer.

The negative electrode includes a negative electrode current collector and a negative electrode active material layer including the negative electrode active material on the negative electrode current collector.

The negative electrode active material may be a material that reversibly intercalates/deintercalates lithium ions, a lithium metal, a lithium metal alloy, a material capable of doping and dedoping lithium, or a transition metal oxide.

The material that reversibly intercalates/deintercalates lithium ions includes carbon materials. The carbon material may be any generally-utilized carbon-based negative electrode active material in a rechargeable lithium battery. Examples of the carbon material include crystalline carbon, amorphous carbon, and a combination thereof. The crystalline carbon may be non-shaped, or sheet, flake, spherical, or fiber shaped natural graphite or artificial graphite. The amorphous carbon may be a soft carbon, a hard carbon, a mesophase pitch carbonized product, fired coke, and/or the like.

The lithium metal alloy may include lithium and a metal selected from among Na, K, Rb, Cs, Fr, Be, Mg, Ca, Sr, Si, Sb, Pb, In, Zn, Ba, Ra, Ge, Al, and Sn.

The material capable of doping and dedoping lithium may include Si, $SiO_x$ ($0 < x < 2$), a Si-Q alloy (wherein Q is selected from among an alkali metal, an alkaline-earth metal, a Group 13 element, a Group 14 element, a Group 15 element, a Group 16 element, a transition metal, a rare earth element, and a combination thereof, and not Si), Sn, $SnO_2$, a Sn-R alloy (wherein R is an alkali metal, an alkaline-earth metal, a Group 13 element, a Group 14 element, a Group 15 element, a Group 16 element, a transition element, a rare earth element, or a combination thereof, and not Sn), and/or the like. At least one of them may be mixed with $SiO_2$.

The elements Q and R may be selected from among Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and combination thereof.

The transition metal oxide may be a vanadium oxide, a lithium vanadium oxide, and/or the like.

In some embodiments, the negative electrode active material may include at least one selected from among graphite and a Si composite.

The Si composite may include: a core including Si-containing particles: and amorphous carbon. For example, the Si-containing particles may include at least one selected from among Si-C composite, $SiO_k$ ($0 < k \leq 2$), and an Si alloy.

For example, the Si-C composite may include: a core including Si particles; and amorphous carbon.

A central portion of the core, including the Si particles, may also include pores, and a radius of the central portion may correspond to about 30% to about 50% of a radius of the Si-C composite.

The Si particles may have an average particle diameter of about 10 nm to about 200 nm.

As utilized herein, the average particle diameter may be a particle size (D50) at a volume ratio of 50% in a cumulative size-distribution curve.

If the average particle diameter of the Si particle is within the above range, volume expansion occurring during charging and discharging may be suppressed or reduced, and a disconnection of a conductive path due to particle crushing during charging and discharging may be prevented or reduced.

The Si particles may be included in an amount of about 1 wt% to about 60 wt%, for example, about 3 wt% to about 60 wt%, based on a total weight of the Si-C composite.

The central portion may not include (e.g., may exclude any) amorphous carbon, and the amorphous carbon may be present only on the surface portion of the negative electrode active material.

Herein, the surface portion indicates a region from the central portion of the negative electrode active material to the outermost surface of the negative electrode active material.

In some embodiments, the Si particles are substantially uniformly included over the negative electrode active material, that is, present at a substantially uniform concentration in the central portion and the surface portion thereof.

The amorphous carbon may be soft carbon, hard carbon, mesophase pitch carbonized product, calcined coke, or a combination thereof.

The negative electrode active material may further include crystalline carbon.

If the negative electrode active material includes a Si-C composite and crystalline carbon together, the Si-C composite and crystalline carbon may be included in the form of a mixture, and in this case, the Si-C composite and

crystalline carbon may be included in a weight ratio of about 1:99 to about 50:50. For example, the Si-C composite and crystalline carbon may be included in a weight ratio of about 3 : 97 to about 20 : 80 or about 5 : 95 to about 20 : 80.

The crystalline carbon may be for example graphite, and more specifically natural graphite, artificial graphite, or a mixture thereof.

The crystalline carbon may have an average particle diameter of about 5 $\mu$m to about 30 $\mu$m.

The amorphous carbon precursor may include a coal-based pitch, mesophase pitch, petroleum-based pitch, coal-based oil, petroleum-based heavy oil, or a polymer resin such as a phenol resin, a furan resin, or a polyimide resin.

In the negative electrode active material layer, the negative electrode active material may be included in an amount of about 95 wt% to about 99 wt% based on a total weight of the negative electrode active material layer.

In some embodiments, the negative electrode active material layer may include a binder, and optionally a conductive material. In the negative electrode active material layer, the amount of the binder may be about 1 wt% to about 5 wt% based on a total weight of the negative electrode active material layer. If it further includes the conductive material, it may include about 90 wt% to about 98 wt% of the negative electrode active material, about 1 wt% to about 5 wt% of the binder, and about 1 wt% to about 5 wt% of the conductive material.

The binder improves binding properties of negative electrode active material particles with one another and with a current collector. The binder may be a non-water-soluble binder, a water-soluble binder, or a combination thereof.

The non-water-soluble binder may be polyvinylchloride, carboxylated polyvinylchloride, polyvinylfluoride, polyurethane, polytetrafluoroethylene, polyvinylidene fluoride, polyethylene, polypropylene, polyamideimide, polyimide, or a combination thereof.

The water-soluble binder may be a rubber-based binder or a polymer resin binder. The rubber-based binder may be selected from among a styrene-butadiene rubber, an acrylated styrene-butadiene rubber (SBR), an acrylonitrile-butadiene rubber, an acrylic rubber, a butyl rubber, a fluorine rubber, and a combination thereof. The polymer resin binder may be selected from among polytetrafluoroethylene, ethylene propylene copolymer, polyethylene oxide, polyvinylpyrrolidone, polyepichlorohydrine, polyphosphazene, polyacrylonitrile, polystyrene, an ethylene propylenediene copolymer, polyvinylpyridine, chlorosulfonated polyethylene, latex, a polyester resin, an acrylic resin, a phenolic resin, an epoxy resin, polyvinyl alcohol, and a combination thereof.

If the water-soluble binder is utilized as the negative electrode binder, a cellulose-based compound may be further utilized to provide viscosity as a thickener. The cellulose-based compound includes one or more of carboxylmethyl cellulose, hydroxypropylmethyl cellulose, methyl cellulose, or alkali metal salts thereof. The alkali metal may be Na, K, or Li. Such a thickener may be included in an amount of about 0.1 to about 3 wt% based on 100 wt% of the negative electrode active material.

The negative electrode current collector may be selected from among a copper foil, a nickel foil, a stainless steel foil, a titanium foil, a nickel foam, a copper foam, a polymer substrate coated with a conductive metal, and a combination thereof.

**Positive Electrode**

The positive electrode includes a positive electrode current collector and a positive electrode active material layer on the positive electrode current collector, and the positive electrode active material layer includes a positive electrode active material.

The positive electrode active material may include lithiated intercalation compounds that reversibly intercalate and deintercalate lithium ions.

For example, at least one composite oxide of lithium and a metal of cobalt, manganese, nickel, or a combination thereof may be utilized.

The composite oxide having a coating layer on the surface thereof may be utilized, or a mixture of the composite oxide and the composite oxide having a coating layer may be utilized. The coating layer may include a coating element compound of an oxide of a coating element, a hydroxide of a coating element, an oxyhydroxide of a coating element, an oxycarbonate of a coating element, or a hydroxycarbonate of a coating element. The compound for the coating layer may be either amorphous or crystalline. The coating element included in the coating layer may be Mg, Al, Co, K, Na, Ca, Si, Ti, V, Sn, Ge, Ga, B, As, Zr, or a mixture thereof. The coating process may include any processes as long as it does not cause any side effects on the properties of the positive electrode active material (e.g., spray coating, dipping), which is well suitable to persons having ordinary skill in this art, and thus a detailed description thereof is omitted.

For example, the positive electrode active material may include a lithium nickel-based composite oxide represented by Chemical Formula A1:

Chemical Formula A1 $$Li_{a1}Ni_{x1}M^1_{y1}M^2_{z1}O_{2-b1}X_{b1}$$

In Chemical Formula A1, $0.9 \leq a1 \leq 1.2$, $0.7 \leq x1 \leq 1$, $0 \leq y1 \leq 0.2$, $0 \leq z1 \leq 0.2$, $0.9 \leq x1+y1+z1 \leq 1.1$, and $0 \leq b1 \leq 0.1$; $M^1$

and $M^2$ may each independently be one or more elements selected from among Al, B, Ba, Ca, Ce, Co, Cr, Cu, Fe, Mg, Mn, Mo, Nb, Si, Sr, Ti, V, W, and Zr; and X is one or more elements selected from among F, P, and S.

In Chemical Formula A1, $0.75 \leq x1 \leq 1$, $0 \leq y1 \leq 0.18$, and $0 \leq z1 \leq 0.18$; $0.85 \leq x1 \leq 1$, $0 \leq y1 \leq 0.15$, and $0 \leq z1 \leq 0.15$; or $0.9 \leq x1 \leq 1$, $0 \leq y1 \leq 0.1$, and $0 \leq z1 \leq 0.1$.

For example, the positive electrode active material may include a lithium nickel-based composite oxide represented by Chemical Formula A2. The compound represented by Chemical Formula A2 may be referred to as a lithium nickel cobalt-based composite oxide:

Chemical Formula A2 $Li_{a2}Ni_{x2}CO_{y2}M^3_{z2}O_{2-b2}X_{b2}$

In Chemical Formula A2, $0.9 \leq a2 \leq 1.8$, $0.7 \leq x2 < 1$, $0 < y2 \leq 0.2$, $0 \leq z2 \leq 0.2$, $0.9 \leq x2+y2+z2 \leq 1.1$, and $0 \leq b2 \leq 0.1$, $M^3$ is one or more elements selected from among Al, B, Ba, Ca, Ce, Cr, Fe, Mg, Mn, Mo, Nb, Si, Sr, Ti, V, W, and Zr, and X is one or more elements selected from among F, P, and S.

In Chemical Formula A2, $0.75 \leq x2 \leq 0.99$, $0 \leq y2 \leq 0.15$, and $0 \leq z2 \leq 0.15$; $0.85 \leq x2 \leq 0.99$, $0.01 \leq y2 \leq 0.15$, and $0.01 \leq z2 \leq 0.15$; or $0.9 \leq x2 \leq 0.99$, $0.01 \leq y2 \leq 0.1$, and $0.01 \leq z2 \leq 0.1$.

For example, the positive electrode active material may include a lithium nickel-based composite oxide represented by Chemical Formula A3. The compound represented by Chemical Formula A3 may be referred to as lithium nickel-cobalt-aluminum oxide or lithium nickel-cobalt-manganese oxide.

Chemical Formula A3 $Li_{a3}Ni_{x3}Co_{y3}M^4_{z3}M^5_{w3}O_{2-b3}X_{b3}$

In Chemical Formula A3, $0.9 \leq a3 \leq 1.8$, $0.7 \leq x3 \leq 0.98$, $0.01 \leq y3 \leq 0.19$, $0.01 \leq z3 \leq 0.19$, $0 \leq w3 \leq 0.19$, $0.9 \leq x3+y3+z3+w3 \leq 1.1$, and $0 \leq b3 \leq 0.1$, $M^4$ is one or more elements selected from among Al and Mn, $M^5$ is one or more elements selected from among B, Ba, Ca, Ce, Cr, Fe, Mg, Mo, Nb, Si, Sr, Ti, V, W, and Zr, and X is one or more elements selected from among F, P, and S.

In Chemical Formula A3, $0.75 \leq x3 \leq 0.98$, $0 \leq y3 \leq 0.16$, and $0 \leq z3 \leq 0.16$; $0.85 \leq x3 \leq 0.98$, $0.01 \leq y3 \leq 0.14$, $0.01 \leq z3 \leq 0.14$, and $0 \leq w3 \leq 0.14$; or $0.9 \leq x3 \leq 0.98$, $0.01 \leq y3 \leq 0.09$, $0.01 \leq z3 \leq 0.09$, and $0 \leq w3 \leq 0.09$.

For example, the positive electrode active material may include a lithium nickel-based composite oxide represented by Chemical Formula A4. The compound represented by Chemical Formula A4 may be referred to as a cobalt-free lithium nickel-manganese oxide.

Chemical Formula A4 $Li_{a4}Ni_{ix}4Mn_{y4}M^6_{z4}O_{2-b4}X_{b4}$

In Chemical Formula A4, $0.9 \leq a2 \leq 1.8$, $0.7 \leq x4 < 1$, $0 < y4 \leq 0.2$, $0 \leq z4 \leq 0.2$, $0.9 \leq x4+y4+z4 \leq 1.1$, and $0 \leq b4 \leq 0.1$ $M^6$ is one or more elements selected from among Al, B, Ba, Ca, Ce, Cr, Fe, Mg, Mo, Nb, Si, Sr, Ti, V, W, and Zr, and X is one or more elements selected from among F, P, and S.

In a positive electrode according to some embodiments, a content of the positive electrode active material may be about 50 wt% to about 99 wt%, about 60 wt% to about 99 wt%, about 70 wt% to about 99 wt%, about 80 wt% to about 99 wt%, or about 90 wt% to about 99 wt% based on a total weight of the positive electrode active material layer.

In some embodiments of the present disclosure, the positive electrode active material layer may optionally include a conductive material and a binder. Each content of the conductive material and the binder may be about 1.0 wt% to about 5.0 wt%, based on a total weight of the positive electrode active material layer.

The conductive material is utilized to impart conductivity to the negative electrode, and any electrically conductive material may be utilized as a conductive material unless it causes a chemical change in a battery. Examples of the conductive material may include a carbon-based material such as natural graphite, artificial graphite, carbon black, acetylene black, ketjen black, carbon fiber, and/or the like; a metal-based material of a metal powder or a metal fiber including copper, nickel, aluminum, silver, and/or the like; a conductive polymer such as a polyphenylene derivative; or a mixture thereof.

The binder improves binding properties of positive electrode active material particles with one another and with a current collector. Examples thereof may be polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and/or the like, but are not limited thereto.

Al may be utilized as the positive electrode current collector, but is not limited thereto.

**Separator**

The rechargeable lithium battery may further include a separator between the negative electrode and the

positive electrode, depending on a type or kind of the rechargeable lithium battery. These separators are porous substrates; or it may be a composite porous substrate.

The porous substrate may be a substrate including pores, and lithium ions may move through the pores. The porous substrate may be for example may include polyethylene, polypropylene, polyvinylidene fluoride, and multi-layers thereof such as a polyethylene/polypropylene double-layered separator, a polyethylene/polypropylene/polyethylene triple-layered separator, and a polypropylene/polyethylene/polypropylene triple-layered separator.

The composite porous substrate may have a form including a porous substrate and a functional layer on the porous substrate. The functional layer may be, for example, at least one of a heat-resistant layer and an adhesive layer from the viewpoint of enabling additional function. For example, the heat-resistant layer may include a heat-resistant resin and optionally a filler.

In some embodiments, the adhesive layer may include an adhesive resin and optionally a filler.

The filler may be an organic filler or an inorganic filler.

Referring to the drawing (Figure 1), a rechargeable lithium battery 100 according to some embodiments includes an electrode assembly including a negative electrode 112, a positive electrode 114 facing the negative electrode 112, a separator 113 interposed between the negative electrode 112 and the positive electrode 114, and an electrolyte impregnating the negative electrode 112, the positive electrode 114, and the separator 113, a battery case 120 housing the electrode assembly, and a sealing member 140 sealing the battery case 120. Herein, the battery case may be a cylindrical can.

## Volume of Cylindrical Can

The cylindrical can has a volume of about 10 $cm^3$ or more. If the cylindrical can has a significantly small volume of less than about 10 $cm^3$, a resistance increase rate is large at a high temperature.

On the other hand, the cylindrical can may have a volume of about 140 $cm^3$ or less. If the cylindrical can has a volume of greater than about 140 $cm^3$, an increase in battery resistance and a decrease in cycle-life may occur regardless of types (kinds) and contents of the electrolyte additives at a high temperature.

In contrast, if the cylindrical can has a volume of about 10 $cm^3$ to about 140 $cm^3$, a resistance increase rate changes according to the types (kinds) and contents of the electrolyte additives. For example, the cylindrical may have a volume of about 10 $cm^3$ to about 140 $cm^3$, about 16 $cm^3$ to about 296 $cm^3$, or about 16 $cm^3$ to about 133 $cm^3$.

In the present disclosure, if particles are spherical, "size" or "particle diameter" indicates a particle diameter or an average particle diameter, and if the particles are non-spherical, the "size" or "particle diameter" indicates a major axis length or an average major axis length. That is, if particles are spherical, "particle diameter" indicates a particle diameter, and when the particles are non-spherical, the "particle diameter" indicates a major axis length.

The size or diameter of the particles may be measured utilizing a scanning electron microscope or a particle size analyzer. As the particle size analyzer, for example, HORIBA, LA-950 laser particle size analyzer, may be utilized. When the size of the particles is measured utilizing a particle size analyzer, the average particle diameter (or size) is referred to as D50. D50 refers to the average diameter (or size) of particles whose cumulative volume corresponds to 50 vol% in the particle size distribution (e.g., cumulative distribution), and refers to the value of the particle size corresponding to 50% from the smallest particle when the total number of particles is 100% in the distribution curve accumulated in the order of the smallest particle size to the largest particle size.

Hereinafter, examples of the present invention and comparative examples are described.

## EXAMPLES

## Preparation of Electrolyte

### Preparation Example 1

As a non-aqueous organic solvent, a carbonate-based solvent prepared by mixing ethylene carbonate (EC): ethylmethyl carbonate (EMC): dimethyl carbonate (DMC) = 20:10:70 in a volume ratio was utilized.

With the non-aqueous organic solvent, a lithium salt was mixed, and an additive was added thereto, finally obtaining an electrolyte.

The lithium salt, which included 10 wt% of a lithium imide salt represented by Chemical Formula 2-1 and 90 wt% of $LiPF_6$ based on a total amount of the lithium salt, was utilized at a total molar concentration of 1.15 M.

The additive was a compound represented by Chemical Formula 1-1-1 (CAS No. 16415-09-1) and utilized in a content of 1 wt% based on 100 wt% of the electrolyte.

Chemical Formula 1-1-1

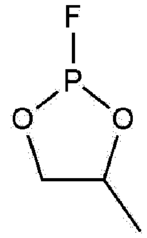

Chemical Formula 2-1

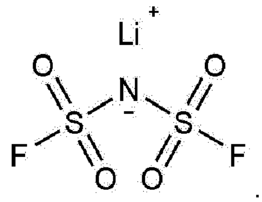

**Preparation Example 2**

An electrolyte for a rechargeable lithium battery was prepared in substantially the same manner as in Preparation Example 1 except that the content of the lithium imide salt was changed into 35 wt% based on a total amount of the lithium salt.

**Preparation Example 3**

An electrolyte for a rechargeable lithium battery was prepared in substantially the same manner as in Preparation Example 1 except that the content of the lithium imide salt was changed into 50 wt% based on a total amount of the lithium salt.

**Preparation Example 4**

An electrolyte for a rechargeable lithium battery was prepared in substantially the same manner as in Preparation Example 1 except that the content of the lithium imide salt was changed into 90 wt% based on a total amount of the lithium salt.

**Preparation Comparative Example 1**

An electrolyte for a rechargeable lithium battery was prepared in substantially the same manner as in Preparation Example 1 except that $LiPF_6$ alone (100 wt%) was utilized as the lithium salt.

**Manufacture of Rechargeable Lithium Battery Cell**

Each rechargeable lithium battery cell of examples and comparative examples was manufactured as shown in Table 1.

**Example 1-1**

(1) Manufacture of Negative Electrode

A mixture of artificial graphite and silicon particles in a weight ratio of 93.5:6.5 was utilized as a negative

electrode active material, and the negative electrode active material, a styrene-butadiene rubber binder, and CNT (length: 50 μm) were mixed in a weight ratio of 97:2:1 and then, dispersed in distilled water, preparing negative electrode active material slurry.

The negative electrode active material slurry was coated on a 10 μm-thick Cu foil, dried at 100 °C, and pressed to manufacture a negative electrode. A negative electrode active material layer formed of the negative electrode active material slurry included 1 wt% of the CNT.

(2) Manufacture of Positive Electrode

$LiNi_{0.94}Co_{0.045}Al_{0.015}O_2$ as a positive electrode active material, polyvinylidene fluoride as a binder, and ketjen black as a conductive material were mixed respectively in a weight ratio of 97:2:1 and then, dispersed in N-methyl pyrrolidone to prepare positive electrode active material slurry.

The positive electrode active material slurry was coated on a 14 μm-thick Al foil, dried at 110 °C, and pressed to manufacture a positive electrode.

(3) Manufacture of Rechargeable Lithium Battery Cell

The manufactured positive and negative electrodes were assembled with a 25 μm-thick polyethylene separator, manufacturing an electrode assembly, the electrode assembly was housed into a cylindrical can, and the electrolyte of Preparation Example 1 was injected thereinto, manufacturing a rechargeable lithium battery cell.

**Example 1-2**

A rechargeable lithium battery cell was manufactured in substantially the same manner as in Example 1-1 except that the electrolyte of Preparation Example 2 was utilized.

**Example 1-3**

A rechargeable lithium battery cell was manufactured in substantially the same manner as in Example 1-1 except that the electrolyte of Preparation Example 3 was utilized.

**Example 1-4**

A rechargeable lithium battery cell was manufactured in substantially the same manner as in Example 1-1 except that the electrolyte of Preparation Example 4 was utilized.

**Comparative Example 1-1**

A rechargeable lithium battery cell was manufactured in substantially the same manner as in Example 1-1 except that the electrolyte of Comparative

Preparation Example 1 was utilized.

**Example 2-1**

A rechargeable lithium battery cell was manufactured in substantially the same manner as in Example 1-3 except that the negative electrode active material, the styrene-butadiene rubber binder, and CNT (length: 50 μm) were mixed in a weight ratio of 97:2.5:0.5 and dispersed in distilled water to prepare negative electrode active material slurry, wherein a negative electrode active material layer formed of the negative electrode active material slurry included 0.5 wt% of the CNT.

**Example 2-2**

A rechargeable lithium battery cell was manufactured in substantially the same manner as in Example 1-3.

**Example 2-3**

A rechargeable lithium battery cell was manufactured in substantially the same manner as in Example 1-3

except that the negative electrode active material, the styrene-butadiene rubber binder, and CNT (length: 50 μm) were mixed in a weight ratio of 97:1:2 and dispersed in distilled water to prepare negative electrode active material slurry, wherein a negative electrode active material layer formed of the negative electrode active material slurry included 2 wt% of the CNT.

**Comparative Example 2-1**

A rechargeable lithium battery cell was manufactured in substantially the same manner as in Example 1-3 except that carboxymethyl cellulose (CMC) was utilized instead of the CNT (length: 50 μm).

**Comparative Example 2-2**

A rechargeable lithium battery cell was manufactured in substantially the same manner as in Example 1-3 except that the negative electrode active material, the styrene-butadiene rubber binder, and CNT (length: 50 μm) were mixed in a weight ratio of 97:2.9:0.1 and dispersed in distilled water to prepare negative electrode active material slurry, wherein a negative electrode active material layer formed of the negative electrode active material slurry included 0.1 wt% of the CNT.

**Comparative Example 2-3**

A rechargeable lithium battery cell was manufactured in substantially the same manner as in Example 1-3 except that the negative electrode active material, the styrene-butadiene rubber binder, and CNT (length: 50 μm) were mixed in a weight ratio of 96:1:3 and dispersed in distilled water to prepare negative electrode active material slurry, and the negative electrode active material layer formed of the negative electrode active material slurry included 3 wt% of the CNT.

**Example 3-1**

A rechargeable lithium battery cell was manufactured in substantially the same manner as in Example 1-3 except that CNT (length: 5 μm) was utilized instead of CNT (length: 50 μm).

**Example 3-2**

A rechargeable lithium battery cell was manufactured in substantially the same manner as in Example 1-3.

**Example 3-3**

A rechargeable lithium battery cell was manufactured in substantially the same manner as in Example 1-3 except that CNT (length: 100 μm) was utilized instead of the CNT (length: 50 μm).

**Comparative Example 3-1**

A rechargeable lithium battery cell was manufactured in substantially the same manner as in Example 1-3 except that CNT (length: 1 μm) was utilized instead of the CNT (length: 50 μm).

**Comparative Example 3-2**

A rechargeable lithium battery cell was manufactured in substantially the same manner as in Example 1-3 except that CNT (length: 200 μm) was utilized instead of the CNT (length: 50 μm).

| Table 1 | Negative electrode | | Electrolyte | |
|---|---|---|---|---|
| | CNT length (μm) | CNT content (wt%) in the negative electrode active material layer | Additive content in electrolyte (wt%) | Content of lithium imide salt in total lithium salt (wt%) |
| Comp. Ex. 1-1 | 50 | 1 | 1 | 0 |

(continued)

| Table 1 | Negative electrode | | Electrolyte | |
|---|---|---|---|---|
| | CNT length (μm) | CNT content (wt%) in the negative electrode active material layer | Additive content in electrolyte (wt%) | Content of lithium imide salt in total lithium salt (wt%) |
| Ex. 1-1 | 50 | 1 | 1 | 10 |
| Ex. 1-2 | 50 | 1 | 1 | 35 |
| Ex. 1-3 | 50 | 1 | 1 | 50 |
| Ex. 1-4 | 50 | 1 | 1 | 90 |
| Comp. Ex. 2-1 | 50 | 0 | 1 | 50 |
| Comp. Ex. 2-2 | 50 | 0.1 | 1 | 50 |
| Ex. 2-1 | 50 | 0.5 | 1 | 50 |
| Ex. 2-2 | 50 | 1 | 1 | 50 |
| Ex. 2-3 | 50 | 2 | 1 | 50 |
| Comp. Ex. 2-3 | 50 | 3 | 1 | 50 |
| Comp. Ex. 3-1 | 1 | 1 | 1 | 50 |
| Ex. 3-1 | 5 | 1 | 1 | 50 |
| Ex. 3-2 | 50 | 1 | 1 | 50 |
| Ex. 3-3 | 100 | 1 | 1 | 50 |
| Comp. Ex. 3-2 | 200 | 1 | 1 | 50 |

**Evaluation Examples**

The rechargeable lithium battery cells of the examples and the comparative examples were evaluated under the following conditions, and the results are shown in Table 2.

**Evaluation Example 1: Wettability**

The rechargeable lithium battery cells of the examples and comparative examples were cut into a size with a width of 3 centimeter (cm) and a length of 6 cm (area of 18 square centimeter ($cm^2$)), preparing samples.

The samples were supported in an electrolyte for 300 seconds and then, measured with respect to weight changes before and after the support by utilizing an electric scale to evaluate an electrolyte impregnation amount. Herein, the electrolyte was the same as the electrolyte of Example 1.

**Evaluation Example 2: Cycle-life Characteristics at High Temperature**

After initial formation of the rechargeable lithium battery cells of the examples and the comparative examples, the rechargeable lithium battery cells were constant current-charged to a voltage of 4.2 volt (V) at a 0.5 coulomb (C) rate and subsequently, cut off at a 0.05 C rate in the constant voltage mode of 4.2 V at 45 °C. Subsequently, the cells were constant current-discharged to 2.8 V at a 1.0 C rate. The charge and discharge cycles were 300 times repeated. However, there was 10 minute pause for each charge and discharge cycle.

In some embodiments, another charge and discharge experiment was performed in substantially the same manner as above except that the charge and discharge cycle was 500 times repeated.

After each of the experiments, a capacity retention rate at the $X^{th}$ cycle was calculated according to Equation

1, and the results are shown in Table 2.

Equation 1

$$\text{Capacity retention rate} = [\text{Discharge capacity at } X^{th} \text{ cycle} / \text{Discharge capacity at } 1^{st} \text{ cycle}] \times 100$$

**Evaluation Example 3: High-temperature Storage Evaluation**

After initial formation of the rechargeable lithium battery cells of the examples and the comparative examples, the rechargeable lithium battery cells were charged at 1 C under conditions of 4.2 V cut-off constant current charge and 0.05 C cut-off constant voltage charge to SOC 100% (SOC, state of charge = 100%) at 25 °C and then, stored at 60 °C for 30 days.

In some embodiments, the rechargeable lithium battery cells were stored in substantially the same manner as above except that the storage period was changed into 60 days.

After the storage for each period, a resistance increase rate on the $Y^{th}$ day of the storage was calculated according to Equation 2, and the results are shown in Table 2.

Equation 2

$$\text{Resistance increase rate } (\Delta\text{DC-IR}) = 100^*(\text{DC-IR after storage for Y days at 60 °C})/(\text{initial DC-IR})$$

Herein, DC resistance (DC-IR) was calculated from a current difference and a voltage difference if different voltages are applied, and accordingly, the cells were constant current-discharged at 10 A for 10 seconds and constant current-discharged at 1 A for 10 seconds in the initial full charge and then, constant current-discharged at 10 A for 4 seconds, which was utilized with data for 18 seconds and 23 seconds to calculate $\Delta R = \Delta V/\Delta I$ as DC resistance.

Table 2

| | Wettability | Cycle-life characteristics at high temperature | | Storage characteristics at high temperature | |
|---|---|---|---|---|---|
| | Impregnate d amount (g), sample area 18 $cm^2$ @300 sec | High-temperatur e capacity retention rate (%) @300th cycle | High-temperatur e capacity retention rate (%) @500th cycle | High-temperature storage resistance increase rate (%) @30th day | High-temperature storage resistance increase rate (%) @60th day |
| Comp. Ex.1-1 | 0.0158 | 80 | 65 | 124 | 145 |
| Ex. 1-1 | 0.0161 | 81 | 75 | 122 | 131 |
| Ex. 1-2 | 0.0184 | 85 | 78 | 112 | 125 |
| Ex. 1-3 | 0.019 | 84 | 78 | 113 | 123 |
| Ex. 1-4 | 0.0198 | 83 | 73 | 117 | 128 |
| Comp. Ex.2-1 | 0.0141 | 80 | 61 | 131 | 157 |
| Comp. Ex.2-2 | 0.0143 | 82 | 63 | 124 | 144 |
| Ex. 2-1 | 0.0177 | 83 | 79 | 116 | 135 |
| Ex. 2-2 | 0.019 | 84 | 78 | 113 | 123 |
| Ex. 2-3 | 0.0161 | 83 | 81 | 112 | 121 |

(continued)

| | Wettability | Cycle-life characteristics at high temperature | | Storage characteristics at high temperature | |
|---|---|---|---|---|---|
| | Impregnated amount (g), sample area 18 $cm^2$ @300 sec | High-temperature capacity retention rate (%) @300th cycle | High-temperature capacity retention rate (%) @500th cycle | High-temperature storage resistance increase rate (%) @30th day | High-temperature storage resistance increase rate (%) @60th day |
| Comp. Ex.2-3 | 0.0124 | 81 | 69 | 119 | 141 |
| Comp. Ex.3-1 | 0.0132 | 79 | 60 | 124 | 148 |
| Ex. 3-1 | 0.0183 | 82 | 71 | 116 | 127 |
| Ex. 3-2 | 0.019 | 84 | 78 | 113 | 123 |
| Ex. 3-3 | 0.0187 | 83 | 77 | 112 | 124 |
| Comp. Ex.3-2 | 0.0115 | 81 | 70 | 118 | 139 |

Referring to Table 2, the examples exhibited excellent or suitable wettability, high temperature cycle-life characteristics, and high temperature storage characteristics, compared with the comparative examples.

In summary, high-temperature cycle-life characteristics and high temperature storage characteristics of the rechargeable lithium battery cells according to the invention are improved. Furthermore, an increase in resistance at a high temperature could be suppressed or at least reduced. This is achieved by adding a specific combination of the additive represented by Chemical Formula 1 and a lithium imide salt to the electrolyte and also, utilizing CNT with a length of 5 to 100 μm in a content of 0.5 to 2 wt% in the negative electrode active material layer.

## Description of Symbols

100: rechargeable lithium battery
112: negative electrode
113: separator
114: positive electrode
120: battery case
140: sealing member

## Claims

**1.** A rechargeable lithium battery (100), comprising

a positive electrode (114) comprising a positive electrode active material;
a negative electrode (112) comprising a negative electrode active material layer, wherein the negative electrode active material layer comprising a negative electrode active material; and
an electrolyte,
wherein the electrolyte comprises a non-aqueous organic solvent, lithium salts, and an additive,
the additive comprises a compound represented by Chemical Formula 1,
the lithium salts comprise a lithium imide salt,
the negative electrode comprises carbon nanotubes,
an average length of the carbon nanotubes is 5 to 100 micrometer (μm) measured by means of scanning electron microscopy (SEM), and
the carbon nanotubes are included in an amount of 0.5 to 2 wt% based on a total amount of the negative electrode active material layer:

Chemical Formula 1

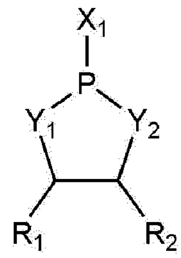

wherein, in Chemical Formula 1,
$X_1$ is a halogen atom;
$Y_1$ and $Y_2$ are each independently O or S; and
$R_1$ and $R_2$ are each independently a hydrogen atom, a halogen atom, a substituted or unsubstituted C1 to C10 alkyl group, a vinyl group, a substituted or unsubstituted C6 to C10 aryl group, or a substituted or unsubstituted C2 to C10 heteroaryl group comprising a N, O, or P heteroatom,
wherein "substituted" refers to replacement of at least one hydrogen of a compound by a halogen atom, a hydroxy group, a C1 to C20 alkoxy group, a nitro group, a cyano group, an amine group, an imino group, an azido group, an amidino group, a hydrazino group, a hydrazono group, a carbonyl group, a carbamyl group, a thiol group, an ester group, an ether group, a carboxyl group or a salt thereof, a sulfonic acid group or a salt thereof, a phosphoric acid or a salt thereof, a C1 to C20 alkyl group, a C2 to C20 alkenyl group, a C2 to C20 alkynyl group, a C6 to C30 aryl group, a C3 to C20 cycloalkyl group, a C3 to C20 cycloalkenyl group, a C3 to C20 cycloalkynyl group, a C2 to C20 heterocycloalkyl group, a C2 to C20 heterocycloalkenyl group, and a C2 to C20 heterocycloalkynyl group.

2. The rechargeable lithium battery of claim 1, wherein

$X_1$ is a fluorine atom; and/or
$Y_1$ and $Y_2$ are O; and/or
$R_1$ and $R_2$ are each independently a hydrogen atom or C1 to C5 alkyl group.

3. The rechargeable lithium battery of claim 1, wherein
the additive is a compound represented by Chemical Formula 1-1-1:

Chemical Formula 1-1-1

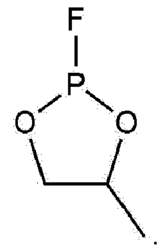

4. The rechargeable lithium battery of any one of the preceding claims, wherein
the additive is included in an amount of 0.1 to 10 wt% based on a total amount of the electrolyte.

5. The rechargeable lithium battery of any one of the preceding claims, wherein

the lithium imide salt is represented by Chemical Formula 2:

Chemical Formula 2

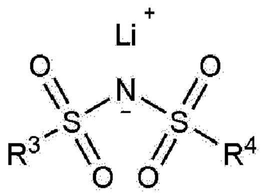
,

wherein, in Chemical Formula 2,
$R^3$ and $R^4$ are each independently a fluorine atom or a C1 to C3 alkyl group substituted with at least one fluorine atom.

6. The rechargeable lithium battery of claim 5, wherein
$R^3$ and $R^4$ are each independently a fluorine atom or a methyl group substituted with three fluorine atoms.

7. The rechargeable lithium battery as claimed in claim 5, wherein the lithium imide salt is represented by Chemical Formula 2-1 or 2-2:

Chemical Formula 2-1

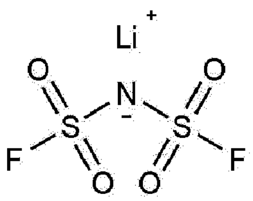

Chemical Formula 2-2

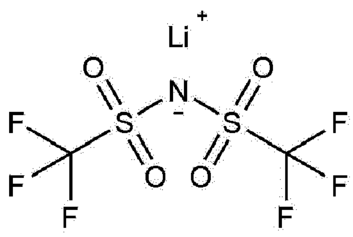
.

8. The rechargeable lithium battery of any one of the preceding claims, wherein
the lithium imide salt is included in an amount of 10 to 90 wt% based on a total amount of the lithium salts.

9. The rechargeable lithium battery of any one of the preceding claims, wherein
the lithium salts further comprises one or more selected from among $LiPF_6$, $LiBF_4$, LiDFOP, LiDFOB, $LiPO_2F_2$, $LiSbF_6$, $LiAsF_6$, $LiN(SO_3C_2F_5)_2$, $LiC_4F_9SO_3$, $LiClO_4$, $LiAlO_2$, $LiALCL_4$, LiCl, LiI, and $LiB(C_2O_4)_2$.

10. The rechargeable lithium battery of any one of the preceding claims, wherein
the non-aqueous organic solvent comprises a carbonate-based, ester-based, ether-based, ketone-based, alcohol-based, or aprotic solvent.

11. The rechargeable lithium battery of claim 10, wherein

the non-aqueous organic solvent comprises a carbonate-based solvent in which cyclic carbonate and chain carbonate are mixed in a volume ratio of 5:95 to 50:50.

**12.** The rechargeable lithium battery of any one of the preceding claims, wherein
the negative electrode active material comprises at least one selected from among graphite and a Si composite.

**13.** The rechargeable lithium battery of claim 12, wherein the negative electrode active material comprises the Si composite,
the Si composite comprising:

a core comprising Si-containing particles; and
amorphous carbon, wherein
the Si-containing particles comprise at least one selected from among Si-C composite, $SiO_k$ ($0 < k \leq 2$), and an Si alloy.

**14.** The rechargeable lithium battery of claim 13, wherein the Si-containing particles comprise the Si-C composite,
the Si-C composite comprising:

a core comprising Si particles; and
amorphous carbon.

**15.** The rechargeable lithium battery of any one of the preceding claims, wherein

the positive electrode active material comprises a lithium nickel-based composite oxide represented by Chemical Formula A1:

Chemical Formula A1 $$Li_{a1}Ni_{x1}M^1_{y1}M^2_{z1}O_{2-b1}X_{b1}$$

wherein, in Chemical Formula A1,
$0.9 \leq a1 \leq 1.2$, $0.7 \leq x1 \leq 1$, $0 \leq y1 \leq 0.2$, $0 \leq z1 \leq 0.2$, $0.9 \leq x1+y1+z1 \leq 1.1$, and $0 \leq b1 \leq 0.1$;
$M^1$ and $M^2$ are each independently one or more elements selected from among Al, B, Ba, Ca, Ce, Co, Cr, Cu, Fe, Mg, Mn, Mo, Nb, Si, Sr, Ti, V, W, and Zr; and
X is one or more elements selected from among F, P, and S.

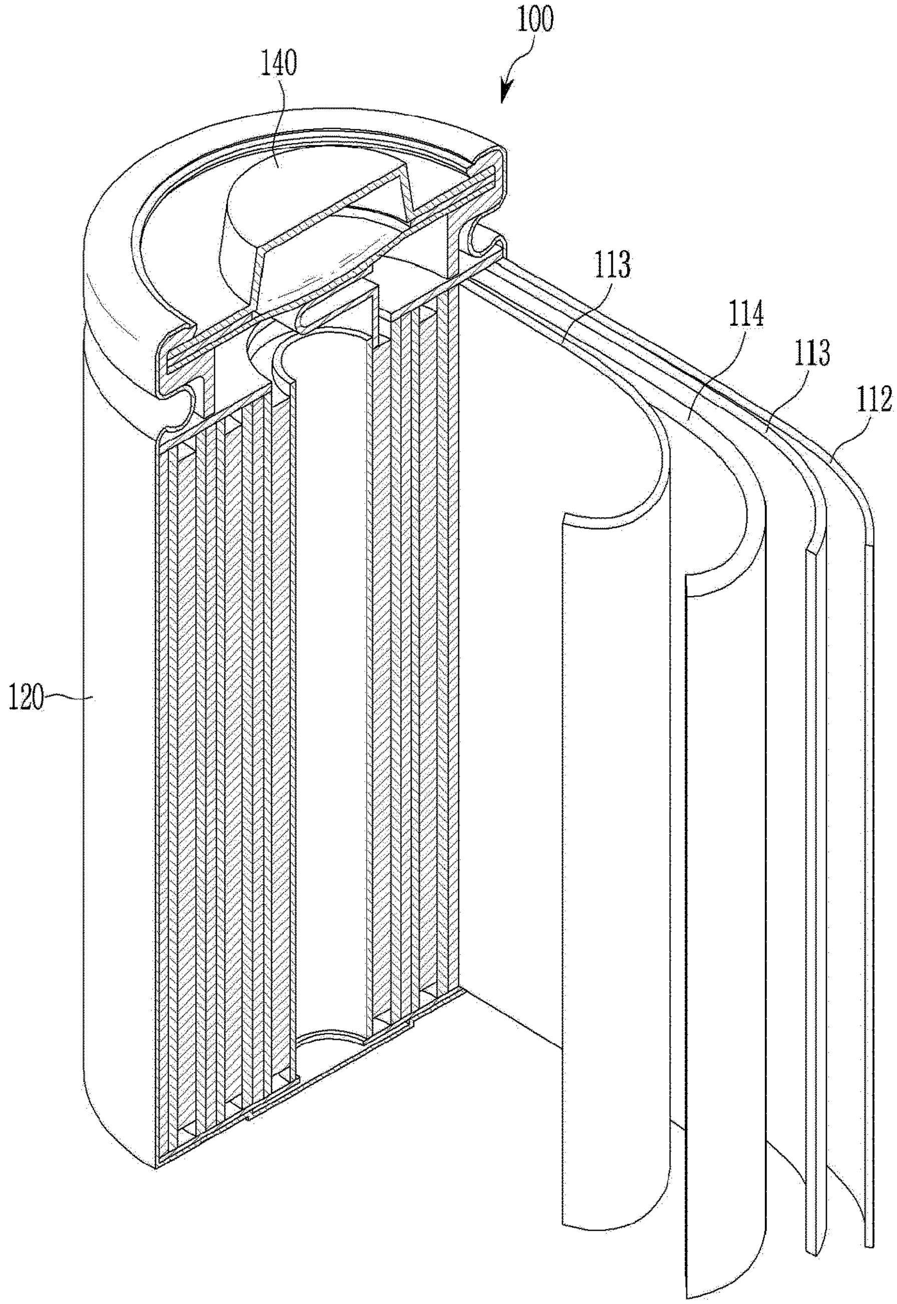


Fig. 1

Europäisches Patentamt
European Patent Office
Office européen des brevets

# EUROPEAN SEARCH REPORT

Application Number
EP 24 15 0184

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 4 142 008 A1 (SAMSUNG SDI CO LTD [KR]) 1 March 2023 (2023-03-01) * example 1 * * paragraph [0065] * | 1-15 | INV. H01M10/0567 H01M10/0568 H01M10/0569 H01M4/62 H01M10/0525 H01M4/133 H01M4/134 H01M4/525 H01M4/587 |
| Y | US 2022/393226 A1 (DONG YINGNAN [US] ET AL) 8 December 2022 (2022-12-08) * paragraph [0147] * | 1-15 | |
| Y | US 2020/203767 A1 (CHENG QIAN [JP] ET AL) 25 June 2020 (2020-06-25) * paragraph [0036] * * paragraph [0046] * | 8 | |
| | | | TECHNICAL FIELDS SEARCHED (IPC) |
| | | | H01M |

The present search report has been drawn up for all claims

| Place of search | Date of completion of the search | Examiner |
|---|---|---|
| The Hague | 19 June 2024 | Fodor, Anna |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

1

EPO FORM 1503 03.82 (P04C01)

# ANNEX TO THE EUROPEAN SEARCH REPORT ON EUROPEAN PATENT APPLICATION NO.

EP 24 15 0184

This annex lists the patent family members relating to the patent documents cited in the above-mentioned European search report. The members are as contained in the European Patent Office EDP file on
The European Patent Office is in no way liable for these particulars which are merely given for the purpose of information.

19-06-2024

| Patent document cited in search report | Publication date | Patent family member(s) | Publication date |
|---|---|---|---|
| EP 4142008 A1 | 01-03-2023 | CN 115732742 A | 03-03-2023 |
| | | EP 4142008 A1 | 01-03-2023 |
| | | KR 20230031007 A | 07-03-2023 |
| | | US 2023093801 A1 | 30-03-2023 |
| US 2022393226 A1 | 08-12-2022 | CN 117546330 A | 09-02-2024 |
| | | EP 4348750 A1 | 10-04-2024 |
| | | JP 2024520653 A | 24-05-2024 |
| | | KR 20240016355 A | 06-02-2024 |
| | | TW 202308210 A | 16-02-2023 |
| | | US 2022393226 A1 | 08-12-2022 |
| | | WO 2022256535 A1 | 08-12-2022 |
| US 2020203767 A1 | 25-06-2020 | JP 6965991 B2 | 10-11-2021 |
| | | JP 2020527290 A | 03-09-2020 |
| | | US 2020203767 A1 | 25-06-2020 |
| | | WO 2019016925 A1 | 24-01-2019 |

EPO FORM P0459

For more details about this annex : see Official Journal of the European Patent Office, No. 12/82